# EUROPEAN PATENT SPECIFICATION

(11) **EP 0 429 989 B1**
(45) Date of publication and mention of the grant of the patent: **17.03.1993**
(21) Application number: 90121965.9
(22) Date of filing: 16.11.1990
(51) Int. Cl.: F22G 1/16, A23N 17/00

(54) **Electrical steam dryer and/or superheater**
Elektrischer Dampftrockner und/oder Überhitzer
Sécheur et/ou surchauffeur de vapeur électrique

(30) Priority: 27.11.1989 DK 5966/89
(43) Date of publication of application: 05.06.1991
(73) Proprietor: DANSTOKER A/S, DK-7400 Herning (DK)
(72) Inventor: Andersen, Henry Bech Ravn, DK-7400 Herning (DK)
(74) Representative: Roerboel, Leif

(56) References cited:
- EP-A- 0 191 267
- EP-A- 0 240 267
- EP-A- 0 325 829
- DE-A- 3 316 349
- US-A- 2 467 393
- US-A- 2 481 760

## Description

The present invention relates to an electrical steam drier and/or superheater of the kind set forth in the preamble of claim 1.

A steam drier and/or superheater of the kind referred to above is known from the document EP-A-0 191 267.

It is the object of the present invention to provide the construction of such an electrical steam drier or superheater assembled in such a manner, that it may be opened with a view to maintenance and/or inspection with the least possible effort, and which likewise with a minimum of effort can be cleaned internally, when it is open. This object is achieved with an electrical steam drier and/or superheater, according to present invention additionally exhibiting the features set forth in the characterizing clause of claim 1. With this construction, it is possible to remove the heating elements from one end of the heating chamber, and as the partition wall required to produce the requisite circulation is removed simultaneously, the inside of the heating chamber is extremely easily accessible for cleaning, maintenance and/or inspection, this also applying to the parts having been removed, viz. the partition wall and the heating elements.

Advantageous embodiments of the electrical steam drier and/or superheater according to the present invention, the effects of which will be evident from the following detailed portion of the present specification, are set forth in claims 2 and 3.

In the following detailed specification, the present invention will be explained in more detail with reference to the exemplary embodiment of an electrical steam drier and/or superheater according to the present invention shown in the drawing, in which
Figure 1 shows the apparatus seen in elevation and partly in section,
Figure 2 shows the apparatus as viewed in the direction of the arrow II in Figure 1 and partly in section, while
Figure 3 shows the apparatus as viewed from above in the direction of the arrow III in Figure 1.

The exemplary embodiment of an electrical steam drier and/or superheater according to the present invention described in the following is intended for use in heating steam to be supplied to a plant for pressing pellets of flour or other vegetable material, e.g. for producing feed pellets for animals. In order to avoid that the vegetable material supplied to the presses is transformed into a dough or paste capable of blocking the operation of the presses, it is necessary to ensure that the steam is sufficiently dry, i.e. superheated relative to the saturated state. For this purpose, an electrical steam drier or superheater of the construction described may be inserted between the source of steam and the press or presses, preferably as close to the latter as possible.

The exemplary embodiment of an electrical steam drier or steam superheater according to the present invention shown in the drawing comprises in a manner known in principle
- an inlet 1 for saturated or wet steam to be dried or overheated,
- an outlet 2 for dry or superheated steam, e.g. to be supplied to a pellet-pressing plant for pressing pellets of flour or similar vegetable material,
- a heating chamber 3, placed between the inlet 1 and the outlet 2 and containing electrical heating elements 4 and 5 for heating the steam flowing through, and
- a housing 6 containing the electrical connecting means for the electrical heating elements 4 and 5.

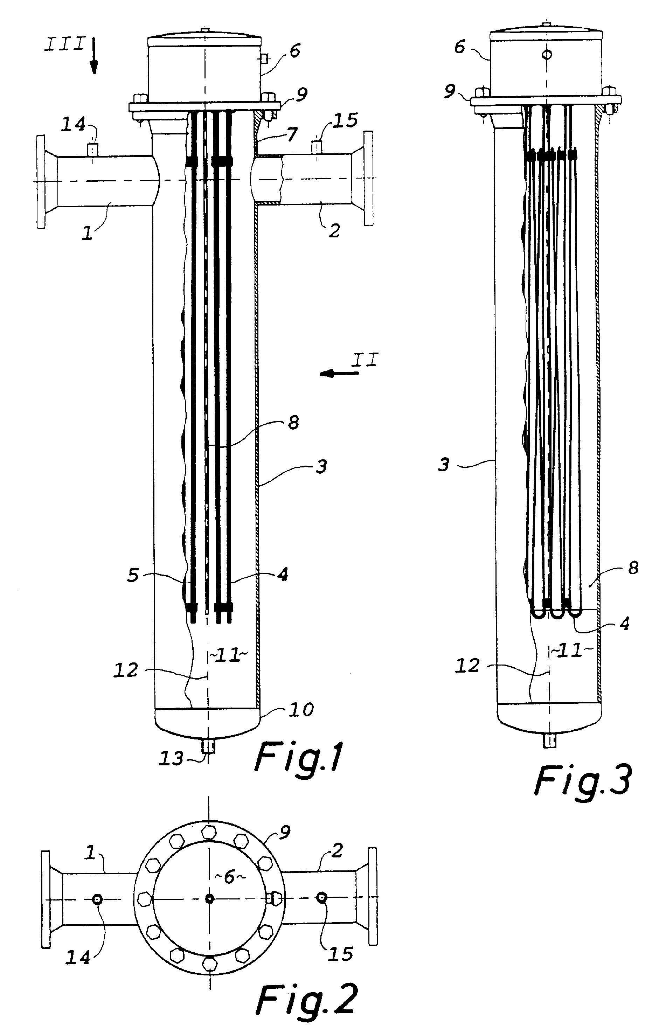

As may be seen from Figure 1, both the inlet 1 and the outlet 2 are placed close to the upper end 7 of the heating chamber 3, and unless special measures were taken, steam from the inlet 1 would flow substantially directly to the outlet 2 without flowing through other parts of the heating chamber 3 and the electrical heating elements 4 and 5 situated therein.

In order to ensure that the steam flowing through the apparatus comes into contact with the electrical heating elements 4 and 5 to the full extent of the latter, a partition wall 8 is placed between the heating elements and having its uppermost end secured to a removable cover 9, to which also the heating elements 4 and 5 are secured with their uppermost ends. The partition wall 8 extends downwardly from the cover 9 to a location well away from the lowermost closed end 10 of the heating chamber, so that between the lowermost end of the partition wall 8 and the bottom of the heating chamber 3 a passage 11 is formed, through which the steam can flow on its way from one side of the partition wall 8 to the other. Because of the large flow cross-sectional area in the passage 11 and consequent very low flow resistance, the partition wall 8 does not have to engage the outside wall in the heating chamber 3 in a completely fluid-tight manner.

In the exemplary embodiment shown, the inlet 1 and the outlet 2 are placed diametrally opposite each other, but for the partition wall 8 to function in the manner described, it is sufficient that the inlet 1 and outlet 2 are placed with such an angular distance between them about the longitudinal axis 12 of the heating chamber, that the inlet and the outlet will be situated on opposite sides of the partition wall.

At its lowermost end 10, the heating chamber 3 is provided with a symbolically indicated steam trap 13, which automatically drains any liquid having collected in the heating chamber 3.

When the internal parts of the heating chamber 3, including the heating elements 4 and 5 and the partition wall 8, are to be cleaned or inspected, it is - apart from any disconnecting of the electrical connections - sufficient merely to free the bolted-on cover 9, which then together with the partition wall and the heating elements may be lifted up from the heating chamber 3. After this, the heating chamber 3 is completely open, and there are no partitions or baffles, that may make cleaning or inspection difficult. The parts having been removed, viz. the cover 9 with the partition wall 8 and the heating elements 4 and 5, are also easily accessible and may be cleaned or inspected without difficulty. Since, as mentioned above, the partition wall 8 does not have to fit completely closely to the inside of the outer wall in the heating chamber 3, it will when removing the "innards" not produce any risk of blocking or jamming, even if a small quantity of impurities has been deposited in the heating chamber during a long operating spell.

The drawing shows the steam drier and/or steam superheater according to the present invention in an orientation in space, in which the heating chamber 3 is vertical. The apparatus will, of course, also function in other orientations, but the vertical orientation of the heating chamber 3 is preferred, partly because it causes the least possible mechanical stress on the electrical heating elements 4 and 5 and the partition wall 8, partly because in this orientation, any water will collect in the lowermost end 10 of the heating chamber, from where the water is automatically drained through the steam trap 13.

In the exemplary embodiment shown, connecting pipes stubs 14 and 15 are placed on the upper side of the inlet 1 and the outlet 2 respectively. Each of these stubs is provided with a thermometer (not shown) for reading the temperature on the inlet and outlet side respectively.

In addition to the electrical connecting elements for the heating elements 4 and 5, the housing 6 contains thermostats, the sensors of which are placed at the outlet 2, as well as an overheating protector adapted to interrupt the electrical current, if the heating elements 4 and/or 5 become excessively hot, e.g. because of an interruption of the flow of steam.

In the exemplary embodiment shown, which corresponds to an embodiment having been tested in practice, the heating elements 4 and 5 are band-shaped or strip-shaped heating elements extending downwardly from the cover 9 and at the lowermost end of the partition wall 8 being bend upwardly to end at some distance from the cover 9, where the "free" ends of the elements are secured to those parts of the elements secured to the cover 9. Additionally, the elements are secured to each other close to the lowermost end of the partition wall 8. The elements are, however, in no place secured to the partition wall 8, and in this manner, any problems with different thermal expansion of the partition wall on the one hand and the heating elements on the other hand are avoided.

### List of Parts

1 inlet
2 outlet
3 heating chamber
4 electrical heating elements
5 electrical heating elements
6 housing
7 upper end
8 partition wall
9 cover
10 closed end
11 passage
12 longitudinal axis
13 steam trap
14 connecting pipe stub
15 connecting pipe stub

## Claims

1. An electrical steam drier and/or superheater of the kind comprising
a) an inlet (1) for saturated steam,
b) an outlet (2) for dry or superheated steam,
c) between the inlet (1) and the outlet (2), a heating chamber (3) with electrical heating elements (4, 5) for heating the steam flowing through, and
d) connecting means (in 6) for the electrical heating elements (4, 5), whereby
e) the heating chamber (3) is elongated and substantially permanently closed at a first end (10), and
f) the inlet (1) and the outlet (2) are situated with an angular distance between them about the longitudinal axis (12) of the heating chamber at or close to the other, opposite end (7) of the heating chamber,
**characterized** in
g) that at the other end (7) mentioned, the heating chamber (3) is closed by a removable cover (9), to which
g1) on the inside are secured
g1a) a partition wall (8) extending from the cover (9) in the longitudinal direction of the heating chamber to a location at a distance from said first end of the chamber, said partition wall being placed in such a manner, that the inlet (1) and outlet (2) are situated on opposite sides of the partition wall, and
g1b) at least one electrical heating element (4, 5) extending from the cover (9) along one side of the partition wall (8), and
g2) on the outside are secured the requisite connecting means (in 6) for the heating element or elements (4, 5).

2. An electrical steam drier and/or superheater according to claim 1, **characterized** in that the electrical heating elements (4, 5) are placed on both sides of the partition wall (8).

3. An electrical steam drier and/or superheater according to claim 1 or 2, **characterized** in that it is placed or adapted to be placed with the heating chamber (3) extending substantially vertically with said first, closed end (10) below.

## Patentansprüche

1. Elektrischer Dampftrockner und/oder Überhitzer derjenigen Art umfassend
a) einen Eintritt (1) für gesättigten Dampf,
b) einen Ausfluss (2) für trockenen oder überhitztenen Dampf,
c) eine zwischem dem Eintritt (1) und dem Ausfluss (2) befindliche Heizkammer (3) mit elektrischen Heizkörpern (4,5) zur Heizung des durchströmenden Dampfes, und
d) Anschlussorgane (in 6) für die elektrischen Heizkörper (4,5), wobei
e) die Heizkammer (3) länglich ist und in der Hauptsache an einem ersten Ende (10) permanent geschlossen ist, und
f) der Eintritt (1) und der Ausfluss (2) mit einem gegenseitigen Winkelabstand um die Längsachse (12) der Heizkammer herum an oder in der Nähe des anderen, gegenüberliegenden Ende (7) der Heizkammer angebracht sind,
dadurch **gekennzeichnet,**
g) dass die Heizkammer (3) am erwähnten anderen Ende (7) durch einen abnehmbaren Deckel (9) geschlossen ist, woran
g1) an der Innenseite festgemacht sind
g1a) eine Trennwand (8), die sich von dem Deckel (9) in der Längsrichtung der Heizkammer (3) zu einer Lage im Abstand von dem erwähnten ersten Ende der Kammer erstreckt, und die so angebracht ist, dass der Eintritt (1) und dem Ausfluss (2) sich an gegenüberliegenden Seiten der Trennwand befinden, und
g1b) mindestens ein elektrischer Heizkörper (4,5), der sich von dem Deckel (9) längs der einen Seite der Trennwand (8) erstreckt, und
g2) an der Aussenseite die notwendigen Anschlussorgane (in 6) für den oder die Heizkörper (4,5) festgemacht sind.

2. Elektrischer Dampftrockner und/oder Überhitzer gemäss Anspruch 1, dadurch **gekennzeichnet**, dass elektrische Heizkörper (4,5) an den beiden Seiten der Trennwand (8) angebracht sind.

3. Elektrischer Dampftrockner und/oder Überhitzer gemäss den Ansprüchen 1 oder 2, dadurch **gekennzeichnet,** dass er mit der Heizkammer in der Hauptsache senkrecht verlaufend und mit dem erwähnten ersten geschlossenen Ende (10) unten angebracht oder für Anbringung beschaffen ist.

## Revendications

1. Sécheur et/ou surchauffeur à vapeur electrique de la sorte comprenante:
a) un orifice d'entrée (1) pour de la vapeur saturée,
b) un orifice de sortie (2) pour de la vapeur sèche ou surchauffée,
c) une chambre de chauffage (3) située entre l'orifice d'entrée (1) et l'orifice de sortie (2) avec des corps de chauffe electriques (4,5) pour chauffage du courant de vapeur y traversant, et
d) des organes de connexion (dans 6) pour les corps de chauffe electriques (4,5), où
e) la chambre de chauffage (3) est allongée et essentiellement fermée à titre permanent à une première extrémité (10), et
f) l'orifice d'entrée (1) et l'orifice de sortie (2) sont situés à distance angulaire l'un de l'autre autour de l'axe longitudinal (12) de la chambre de chauffage à ou à proximité de l'autre éxtremité (7) de la chambre de chauffage,
caractérisé par le fait que
g) la chambre de chauffage (3) à ladite autre extrémité (7) est fermée d'un couvercle détachable (9), à lequel
g1) sur la côté intérieure il y a fixé
g1a) une cloison séparative (8) qui du couvercle (9) s'étend dans la direction longitudinale de la chambre de chauffage (3) jusqu'à une position à distance de ladite première extrémité de la chambre, et qui est située de manière que l'orifice d'entrée (1) et l'orifice de sortie (2) se trouvent des côtés opposées de la cloison séparative, et
g1b) au moins un corps de chauffe (4,5) qui du couvercle (9) s'étend le long de l'une côté de la cloison séparative, et
g2) sur la côté extérieure il y a fixè les necessaires organes de connexion (dans 6) pour le ou les corps de chauffe (4,5).

2. Sécheur et/ou surchauffeur à vapeur electrique selon la revendication 1, caractérisé par le fait qu'il y a situé des corps de chauffe electriques (4,5) sur les deux côtés de la cloison séparative (8).

3. Sécheur et/ou surchauffeur à vapeur électrique selon la revendication 1 ou la revendication 2, caractérisé par le fait qu'il est situé ou adapté à être situé avec la chambre de chauffage (3) s'étendant essentiellement verticalement avec ladite première extrémité fermée (10) en bas.
